(19) **Europäisches Patentamt / European Patent Office / Office européen des brevets**

(11) **EP 4 407 339 A1**

(12) **EUROPEAN PATENT APPLICATION**

(43) Date of publication:
**31.07.2024 Bulletin 2024/31**

(21) Application number: **23153640.0**

(22) Date of filing: **27.01.2023**

(51) International Patent Classification (IPC):
**G01S 7/40** (2006.01)   **G01S 13/931** (2020.01)
**G01S 7/02** (2006.01)

(52) Cooperative Patent Classification (CPC):
**G01S 7/4039; G01S 7/023; G01S 13/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GM Cruise Holdings LLC**
**San Francisco CA 94103 (US)**

(72) Inventors:
• **SANSON, Jessica Bartholdy**
  **95521 Ottobrunn (DE)**

• **BARTHELME, Andreas**
  **95521 Ottobrunn (DE)**
• **GIERE, Andre**
  **95521 Ottobrunn (DE)**
• **BRISKEN, Dr. Stefan Andreas**
  **95521 Ottobrunn (DE)**
• **KABAKCHIEV, Kalin Hristov**
  **95521 Ottobrunn (DE)**
• **LEI, Lei**
  **San Francisco, CA 94103 (US)**

(74) Representative: **Berkenbrink, Kai-Oliver et al**
**Patentanwälte Becker & Müller**
**Turmstrasse 22**
**40878 Ratingen (DE)**

(54) **SENSOR BLOCKAGE DETECTION BASED UPON RAW RADAR DATA**

(57)   A radar sensor is disclosed herein, where the radar sensor detects blockage based upon detected radar signals. The radar sensor includes an antenna that detects electromagnetic radiation in a field of view and processing circuitry that is operably coupled to the antenna. Raw sensor data is generated based upon the detected electromagnetic radiation. A detection list is computed based upon the raw sensor data, and a blockage state for the radar sensor is computed based upon the detection list and the raw sensor data.

FIG. 1

EP 4 407 339 A1

## Description

## BACKGROUND

Sensors for detection systems (e.g., those used in radio detection and ranging (radar) navigation systems for autonomous vehicles and other applications) can be obstructed during operation. For example, exposure to the elements, snow, mud, and dirt can block sensors from receiving signals they would otherwise use to detect objects in their field of view. In some cases, these obstructions may cover the radome or the sensor facia, blocking useful signal.

In other cases, blockage may be partial and/or the number of detectable objects unknown. In these cases, blockages can be more difficult to detect. This is because partial blockage can allow a radar system to detect some objects in its field of view, but not others (e.g., the radar system cannot detect objects when output radar signals are blocked and/or when reflected signals are blocked). Since the number of objects in the system's field of view is typically not known *a priori,* partial blockage can lead to ambiguity. On the one hand, low detection may relate to sparse presence of objects in the field of view (a detection "desert"). On the other, low detection may be indicative of sensor blockage.

Detecting sensor blockage can be done, in principle, by mounting a second sensor proximate to the sensor and using output of the second sensor to ascertain whether the sensor is subject to blockage. The second sensor, for example, can be a camera monitoring the physical state of a radar sensor. However, this solution is often impractical. Such sensor-monitoring is demanding of resources, including bandwidth and physical space. The presence of additional sensors may, by itself, diminish certain detection capabilities of the sensor being monitored. Further, the additional sensors may be subject to the same obscurants as the sensor being monitored. The additional sensors may be rendered inoperative when they are needed to determine an operating state of the primary sensor.

## SUMMARY

The following is a brief summary of subject matter that is described in greater detail herein. This summary is not intended to be limiting as to the scope of the claims.

Described herein are technologies that address the deficiencies identified above. Specifically, described herein is a radar sensor that includes a receiver antenna and processing circuitry that is operably coupled to the receiver antenna. The processing circuitry is configured to perform several acts, where the acts include generating a detection based upon output of the receiver antenna, the detection representing an object in a field of view of the radar sensor that has been detected by the radar sensor. The acts also include generating raw sensor data based upon the output of the receiver antenna. The acts additionally include computing a blockage state for the radar sensor based upon the detection and the raw sensor data. The acts further include outputting the blockage state to a computing system that is coupled to the radar sensor.

A method for determining a blockage state for a radar sensor is also disclosed herein. The method includes performing a scan over a field of view of the radar sensor. The method also includes generating, for a window of time, raw sensor data based upon an electrical signal output by an antenna of the radar sensor. The method further includes outputting a detection list based upon the raw sensor data. The method additionally includes computing a blockage state of the radar sensor based upon the raw sensor data and the detection list, wherein the blockage state indicates whether or not a portion of the radar sensor is subject to blockage. The method further includes outputting the blockage state to a computing system that is in communication with the radar sensor.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

## BRIEF DESCRIPTION OF DRAWINGS

FIG. 1 shows an exemplary system 100 that may be used to detect objects in target area T in accordance with aspects of the present disclosure;

FIG. 2 shows a sensor 120 that may be used with detection system 100;

FIG. 3 shows a schematic of an obstruction 300 that may obstruct a portion of sensor 120;

FIG. 4 shows one aspect of computing system 110 that may be used in conjunction with system 100;

FIG. 5A schematically represents blockage detection using detected signal thresholding;

FIG. 5B schematically represents determining a state of "no blockage" using detected signal thresholding;

FIG. 5C schematically represents determining an obstruction material type using detected signal thresholding;

FIG. 5D schematically represents determining an obstructed channel using detected signal thresholding;

FIG. 6 is a schematic showing another way to determine blockage state B by analyzing noise level;

FIG. 7A shows transmitted signal magnitude variance for a number of channels indicative of a blockage;

FIG. 7B shows little transmitted signal magnitude variance for a number of channels indicative of no blockage;

FIG. 8A is a flowchart 800 that shows implementing aspects of the present disclosure;

FIG. 8B shows an exemplary decision tree for implementing step 806;

FIG. 8C is a flowchart 820 that shows training a machine learning algorithm to implement aspects of the present disclosure; and

FIG. 9 presents a high-level illustration of an exemplary computing device 900 that can be used in accordance with the systems and methodologies disclosed herein.

## DETAILED DESCRIPTION

Several illustrative embodiments will be described in detail with the understanding that the present disclosure merely exemplifies the general inventive concepts. Embodiments encompassing the general inventive concepts may take various forms and the general inventive concepts are not intended to be limited to the specific embodiments described herein.

### Overview of the Disclosed Systems and Methods

Various technologies pertaining to signal detection (e.g., radar signal detection) are disclosed below. The technologies also pertain to navigating autonomous vehicles and other radar-based applications. The technologies are described with reference to the drawings, wherein like reference numerals are used to refer to like elements throughout. In the following description, for purposes of explanation, numerous specific details are set forth to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

As used herein, the terms "component", "system", "generator", and "application" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean "serving as an illustration or example of something."

### Overview of Exemplary Detection System 100

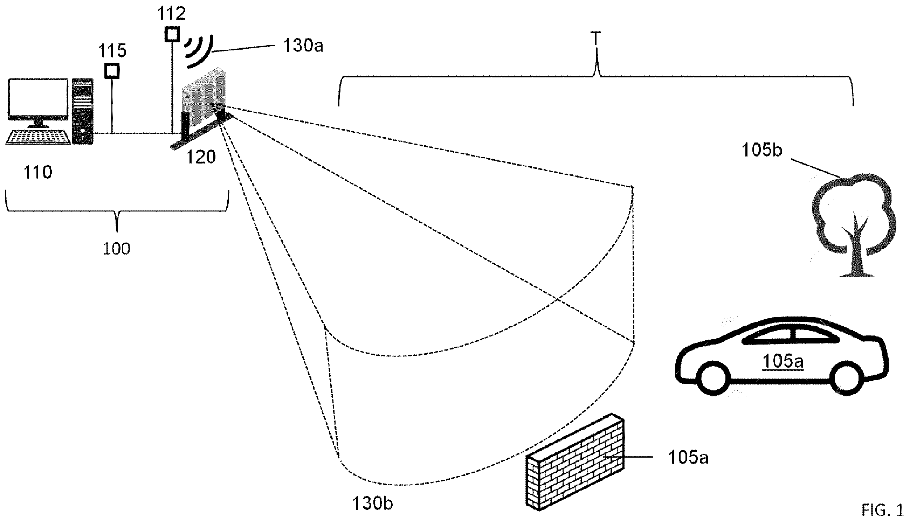

FIG. 1 illustrates a detection system 100 that may be used in accordance with aspects of the present disclosure. Detection system 100 may detect various objects of interest (e.g., objects 105a-105c) in a target area T. In an example, the detection system 100 is a radar sensor.

System 100 includes a computing system 110 and at least one sensor, e.g., sensor 120. Sensor 120 may sense the objects of interest, as described below. Computing system 110 analyzes data acquired by sensor 120 to determine whether objects of interest 105 can be detected from the sensor data. The particular objects of interest 105 may depend on the application. For example, when system 100 is paired with a navigation system for a vehicle, the objects of interest may correspond to potential obstructions for the vehicle (e.g., barriers, cars, trees, etc.).

System 100 may include additional features, aspects beyond sensor 120 and computing system 110. For example, system 100 may include a signal emitter 112. Exemplary emitters 112 include those that emit signals comprising electromagnetic radiation 130a for radar detection of objects. The emitter 112 may be incorporated into sensor 120, or it may be separate from sensor 120.

System 100 may include any number of suitable devices for data transfer and/or communication. Examples include wi-fi transmitters/receivers, ethernet, and cellular communications systems. System 100 may further include other sensors in addition to sensor 120 for inputting information to be used in detection of objects of interest and/or other phenomena. For example, system 100 may include or be in communication with additional device 115 for detecting ambient conditions of sensor 120. The ambient conditions detected by device 115 may include temperature, barometric pressure, humidity, and other conditions. In addition, system 100 may include other devices or features (e.g., signal processing electronics, application specific circuits (ASICs), communication devices, and data storage devices).

System 100 may have various applications. For example, system 100 may be located on a vehicle and provide detection for navigating the vehicle. System 100 may be implemented for navigating autonomous and semi-autonomous vehicles. The vehicles may be ground-based (e.g., automobiles, buses, trucks, robotic vehicles for various applications, including delivering goods, disarming explosives, fixing infrastructure), water based (e.g., boats, underwater drones), and airborne (e.g., passenger aircraft and drones). In other applications, system 100 may be stationary. For example, system 100 may help navigate vehicles, drones, etc. from a command center remote from the actual vehicle or drone.

Sensor 120

Sensor 120 may be a stand-alone sensor, as shown in FIG. 1. Sensor 120 may also include, or be part of, an array of sensors. In some variations, system 100 may include a number of sensors 120 working together (or separately) to probe target area T. In some applications, it may be advantageous to have an array of sensors 120 that covers a large spatial area. As noted above, the system 100 can be a radar sensor, and thus the sensor 120 includes an antenna.

In exemplary applications, sensor 120 may sense and/or emit electromagnetic radiation, e.g., as part of a radar navigation system. The electromagnetic radiation may be in the infrared range. Other sensors 120 and signals are possible. Examples include signals that detect electromagnetic radiation that is in the visible range, in the ultraviolet range, etc. For example, sensor 120 may be used as part of a laser imaging, detection, and ranging (Lidar) system. The principles and examples described herein apply to sensors that may detect still other types of signals (e.g., sound signals, etc.).

As shown in FIG. 1, sensor 120 may project electromagnetic radiation 130a or 130b into its environment to probe for objects of interest. Although FIG. 1 shows sensor 120 projecting the electromagnetic radiation 130a or 130b, it is to be understood that other devices may project electromagnetic radiation 130a or 130b that is received by sensor 120. Exemplary objects of interest include, for example, wall 105a, trees 105b, and other vehicles 105c, as shown in FIG. 1. Objects of interest 105a-105c are merely exemplary and may include any object that could be useful in the operation of system 100.

Sensor 120 receives electromagnetic radiation 130a or 130b after it reflects from objects of interest 105a-105c. The received electromagnetic radiation 130a or 130b signal is then provided to computing system (also referred to herein as processing circuitry) 110 for analysis. As described in more detail below, detection can include one or more of determining a location, type, and motion of an object of interest 105a-105c. Sensor 120 can also be used by system 100 to determine whether or not portions of sensor 120 are blocked or partially blocked (e.g., by mud, ice, snow, or other obstructions).

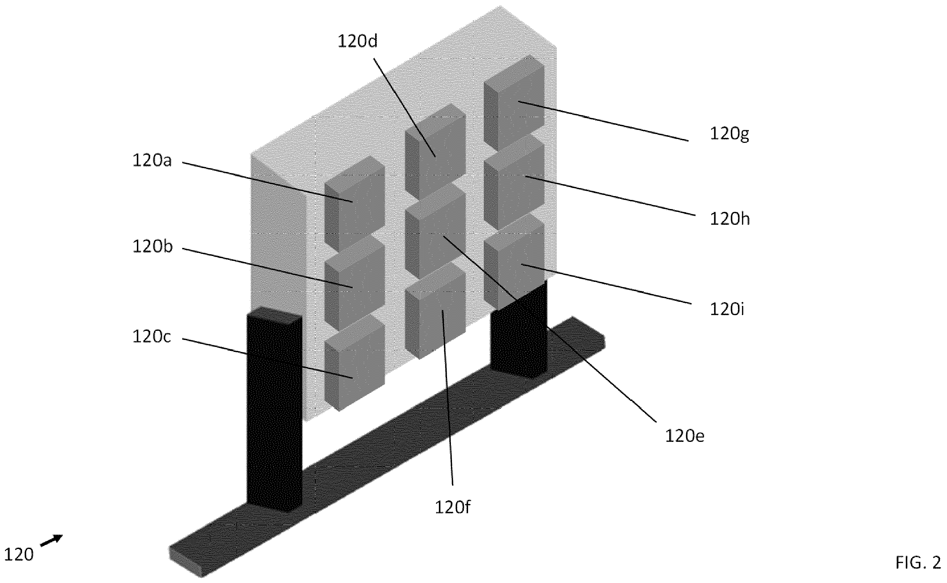

FIG. 2 shows a blow-up of one configuration of sensor 120 with subsection 120a-120i. Subsections 120a-120i may include sub sensor, or entirely distinct electromagnetic radiation detection devices (e.g., antennas). Alternatively, subsections 120a-120i may simply be different spatial divisions of a single detector, i.e., detector 120. FIG. 2 shows that sensor 120 may be subdivided into regions that detect electromagnetic radiation 130a or 130b from different positions. In particular, one subsection 120a may correspond to detecting electromagnetic radiation 130a or 130b from a particular part of the target area T, while another subsection 120b may detect electromagnetic radiation 130a or 130b from another part of the target area T.

It is to be understood that sensor 120 may be part of an array of sensors. Each of the sensors 120 in the array may have subsections analogous to subsections 120a-120i. Each sensor 120 in the array may, for example, receive electromagnetic radiation 130a or 130b from a different portion of target area T. In yet another example, the subsections 120a-120i represent different antennas in a sensor system, such as a radar system.

Subsections 120a-120i may correspond to different detection channels. The different channels may provide detected signal from the different subsections 120a-120i to computing device 110 separately. When each subsection 120a-120i has a different channel, each may be subject to different issues independently of the other.

In one example, a subsection 120a and its respective channel may be subject to a blocking obstruction while others are not. In this case, the blocked subsection 120a provides a received signal to the computing device 110 that differs noticeably from that of the other subsections. For example, a blocked subsection is likely to have a higher signal magnitude or amplitude than unblocked subsections. This is because there is relatively little signal loss in the case of blocking because, among other reasons, the signal is not subject to loss due to traversing a large distance over target area T. In addition, signal received at subsection 120a and sent to computing device 110 via its associated channel may have lower noise than signals from other subsections that have traversed target area T and interacted with objects of interest 105. These discrepancies in the received signals from subsections 120a-120i and their associated channels can be used to detect degree and location of blockage on sensor 120.

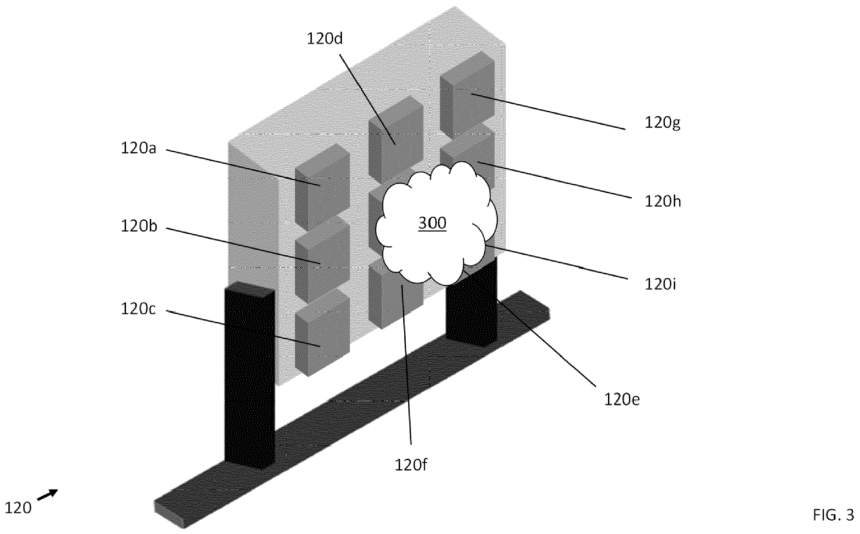

FIG. 3 shows (schematically) sensor 120 in the case of blockage, e.g., subject to an obstruction 300. Obstruction 300 may take on a number of forms depending on the environment of target area T and other factors. For example, obstruction 300 may include mud, snow, water, rain, precipitation, fog, or any other material from target area T that may interfere with the ability of sensor 120 (and subsections 120a-120i) to detect electromagnetic radiation 130a or 130b. Obstruction 300 may result from precipitation when detection system 100 is being used outside (e.g., in a vehicle, such as an autonomous vehicle). In other examples, obstruction 300 may include solid objects (e.g., sand, dirt, material from an organic organism (e.g., a bird, insect, waste, portions of an organic organism, etc.).

As shown in FIG. 3, obstruction 300 may partially or completely obstruct several sensor 120 subsections 120a-120i. For example, in FIG. 3, obstruction 300 blocks subsection 120e completely. Obstruction 300 only partially blocks subsections 120f, 120h, and 120i. Generally, obstruction 300 may obstruct any portion of sensor 120 or other sensors in system 100. Moreover, although only one obstruction 300 is illustrated in FIG. 3, it is to be understood that many such obstructions may be present and inhibit the performance of sensor 120 and other sensors. In fact, as discussed above, it is common for obstructions 300 to result for ambient weather conditions (e.g., snow and rain) and, therefore, to create multiple obstructions for detection system 100.

In addition to the sources of obstruction 300 discussed above, obstruction 300 may also result from impairment in functioning of sensor 120 or other sensors in the array to which sensor 120 belongs that are internal to detection system 100. For example, obstruction 300 may represent malfunction of sensor 120 or sensor subsections 120a-120i. Obstruction 300 may also result from the malfunction of a channel of a subsection. Reasons for sensor portion malfunction can include, for example, malfunctioning of the sensor itself, disruption in power supply to the sensor, crack in a housing of the sensor and/or other mechanical damage to the sensor. Other causes of obstruction 300 include a short or surge in power to one or more of the sensor subsections 120a-120i.

Obstruction 300 may occlude portions of sensor 120 and subsections 120a-120i and, thereby, inhibit detection of objects in the target area T. The possibility of partial blockage, as shown in FIG. 3, creates an ambiguity when the sensor 120 detects few objects of interest. Low detection could reflect a dearth of objects of interest in the target area T (e.g., an object "desert"). On the other hand, low detection could result instead from sensor 120 blockage. That is, when sensor 120 is blocked by obstruction 300, electromagnetic radiation 130a or 130b reflected by objects of interest in target area T would not be detected by sensor 120. To resolve this and similar ambiguities, system 100 is equipped with the capability of determining a blockage state B indicating whether an obstruction 300 blocks a portion of sensor 120. The determination of the blockage state B can be made by computing device 110 by analyzing data from sensor 120.

Computing System 110

Computing system 110 can comprise many different suitable forms. In an example, computing system 110 is a digital signal processor (DSP), a field programmable gate array (FPGA), a microprocessor and associated memory, and/or other computing equipment that is found in radar sensors. In another example, computing system 110 may include a local processor or CPU installed on a vehicle being navigated based upon output of detection system 100. Computing system 110 may include a laptop computer, a desktop computer, a server, a processor array (such as an array of graphical processing units (GPUs), a digital signal processor (DSP), etc. Computing system 110, on the other hand, may be remote from a vehicle being navigated based upon output of detection system 100. Computing system 110 may include application specific integrated circuits (ASICs) devoted to object detection (or other purposes). Computing system 110 may further include hardware specially and particularly designed for artificial intelligence (AI) based application, e.g., integrated circuits incorporating hard-wired artificial neural networks or decision trees.

Computing system 110 may communicate and exchange data with sensor 120 via a wired or wireless connection. Although computing system 110 and sensor 120 are shown physically connected and in proximity in FIG. 1, it is to be understood that this arrangement is optional. In particular, computing system 110 and sensor 120 may be distant from each other and communicate by long distance methods (e.g., wi-fi, cellular technology, etc.).

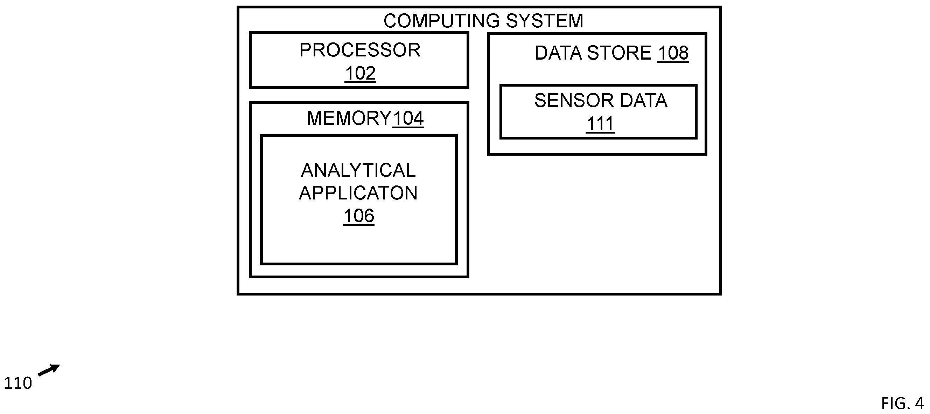

FIG. 4 shows portions of computing system 110 relevant to blockage detection. More particularly, computing system 110 optionally comprises a processor 102 and memory 104.

Memory 104 includes an analytical application 106 (program) that may include one or more machine learning applications 106, e.g., a computer-implemented decision tree, one or more artificial neural network (ANN) applications, etc., loaded therein. In general, application 106 is configured to implement machine learning algorithms described below using sensor data generated by sensor 120. In particular, application 106 can be trained to a) discern and detect objects in the field of view of the sensor 120 or other sensor systems and b) detect obstructions preventing sensor 120 or sensor systems from obtaining useful signal from the field of view. More generally, application 106 can be trained, in exemplary procedures described below, to detect such features and to use this detected information to compute a blockage state for the radar sensor.

Computing system 110 may further include a data store 108. The data store 108 may include raw sensor data 111 generated by the radar sensor. The sensor data 111 can be indicative of positions of objects in relevant environments (e.g., environment of target area T). In a vehicle navigation application, the objects may include vehicles, bicycles, pedestrians, etc. The sensor data 111 may include data associated with objects of interest 105a-105c shown in environment T in FIG. 1. The sensor data 111 may contain reflection data from these and other objects in environment T.

Generally, the computing system 110 (for each radar scan) generates a detection list, where an entry in the detection list is representative of an object in the environment detected by the radar sensor. Each detection in the detection list has raw sensor data (from the sensor data 111) that corresponds thereto. Thus, for example, a detection in the detection list can have a signal-to-noise (SNR) value assigned thereto, a range value (indicative of distance from the radar sensor to the object) assigned thereto, an angle (indicative of position of the object relative to the radar sensor) assigned thereto, a signal magnitude assigned thereto, etc. The raw sensor data can be output of an analog-to-digital converter (ADC) coupled to an antenna of the radar sensor and/or range-Doppler data obtained from a range-Doppler map (for a channel of the radar sensor). As will be described in greater detail below, the analytical application 106 computes a blockage state for the radar sensor based upon the detection list and the raw sensor data. In an example, and as will be described in greater detail below, the computing system 110 computes the blockage state for the radar sensor based upon a number of detections in the detection list and values of features corresponding to the detection and/or in the raw data. The features corresponding to a detection can be SNR, range, angle, magnitude, etc. The features in the raw data can be noise level in a frame, a magnitude level in a range gate (e.g., in a first range gate), a variance in transmitter magnitude, a variance in receiver magnitude, and so forth.

Analytical Application 106

Analytical application 106 includes an algorithm configured to interpret data, e.g., electromagnetic radiation 130 data, detected via sensor 120 (such as the data referenced above with respect to the detection list and the raw data). One example of interpreting data by the analytical application 106 includes correlating data with known conditions to determine a blockage state B of the detector 120 that corresponds to a blocked, partially blocked, or unblocked condition. Analytical application 106 may include one or more machine learning algorithms, or any other algorithm discussed herein. For fast operation, analytical application may include a decision tree that is designed to quickly determine the blockage state B from available information.

Data Store 108

The data store 108 may store data from a frame (e.g., a window of time). This is a most recent data collection by sensor portions 128-120i of electromagnetic radiation 130a and 130b reflected from objects in target area T. Data stored in the data store 108 can include any of the type of raw electromagnetic (or other sensor) data described herein.

The data store 108 may store analyzed data from the current frame being analyzed by application 106. Data store 108 may also store date from prior frames. The analyzed data may include information concerning detections (e.g., type, number, location, time of detection), environmental data such as data obtained from device 115, or other data. The data store 108 may also store data from previous attempts at detection, i.e., frames that occurred prior to current sweep or frame. This previously detected data can include any of the types of data described herein. It can be stored in the form of raw data or analyzed data.

The data store 108 may include long-term memory (e.g., flash drive, ROM/RAM). The data store 108 may also include a buffer or short term memory. The data store 108 may store collected data in real time for nearly instantaneous access by the system 110. While the memory 104 and data store 108 are illustrated as being separate, the memory 104 and data store 108 may be a single computer-readable storage element.

Detection Data

The data store 108 may store detection data as part of sensor data 111. Detection data can include, for example, a number of detections of objects of interest (e.g., objects of interest 105a-105c) in a single frame. In other words, the detection data can include detection list references above.

The detection list is a data structure that stores information about detections, inclusive of a number of detections of objects of interest 105 in a target area T over one or more frames. Detection data can further include prior detections, average detections, or expected detections in the target area T. Storing detections over previous frames, in particular, can be advantageous for ascertaining changes in detection, blockage, and target area T. The prior detections, average detections, or expected detections may correspond to stored maps of target area T and related areas. Detection data can also include estimates of an expected number of detected objects of interest in the target area T. This expected number can be derived from information about target area T, e.g., a detection history and/or mapping data. The estimate may be compared to the number of objects of interest 105 detected during a frame or sweep in order to ascertain accuracy of the detection.

Raw Data

Raw sensor data can include any kind of data collected by sensor 120 and/or any other detection mechanism of system 100 (e.g., device 115). As noted above, raw data could include, for example, data output by an ADC and/or range-Doppler raw data. Raw data can also include data that has been processed (e.g., truncated, averaged, filtered, Fourier transformed, subject to other mathematical transformation, etc.). Raw data may be obtained from sensor 120 in a latest sweep or frame. It may also have been obtained from previous sweeps or frames. Raw data may also be stored over multiple frames to ascertain changes in the data that may correspond to changes in sensor 120 blockage and/or changes in target area T.

Noise

Raw data can include noise, where noise can include any kind of variation in the detected signal that is unrelated to the emitted signal or its detection of objects of interest 105. Noise can be caused by a variety of sources, including random signal interactions with materials, interference between signals (both signals emanating from system 100 and from other sources, e.g., cellular devices or radio transmitters).

Noise in a range-Doppler map for a channel, for example, can be measured and stored as a noise level. Exemplary noise level measures include signal to noise (SNR) and root mean squared (RMS) signal to noise. The noise level can be computed for one frame or multiple frames (e.g., averaged).

Noise levels can be compared to various stored threshold noise levels for analysis, as discussed in more detail below. Such threshold noise levels may be ascertained through operation of system 100, operation of other systems, or assessed via mathematical estimation and analysis.

Detected Signal Magnitude

A detected magnitude (e.g., a detected signal magnitude or amplitude level) of the raw detected electromagnetic radiation 130a and 130b by sensor 120 may also be included in raw data. Signal magnitude can be, for example, a maximum, average, or root mean square amplitude of the detected electromagnetic radiation 130a and 130b by sensor 120.

Signal magnitude can also be stored as function of distance from sensor 120, e.g., close to sensor 120 (e.g., 0 m distance), 1 m or more from the detector 120, 5 m from the detector 120, 10 m from the detector 120, 20 m from the detector 120, 30 m from the detector 120, etc. Signal magnitude data can also include an estimation of the detected signal magnitude at a particular distance or range (e.g., any of the distances or ranges discussed herein) from detector 120.

As with other quantities stored as raw data, signal magnitude may be stored over one detection pass or frame, or over multiple detection passes. Changes in signal magnitude over time may relate to changes in blockage and/or target area T.

Transmitted Signal Variance

Still another quantity that may be included in the raw data is the variance of the magnitude of transmitted electromagnetic radiation (hereinafter, "transmitted signal variance"). This can include mathematical variance (e.g., expectation of the squared deviation of the transmitted amplitude from the mean ( $s^2 = \frac{\sum(x_i - \bar{x})}{n-1}$ , where $s^2$ is the variance, $x_i$ is the amplitude, $\bar{x}$ is the mean, and n is the number of data points)) in the electromagnetic radiation 130a and 130b transmitted by either transmitter 112 or the transmitting portions of sensor 120.

As discussed above, transmitter 112 and/or sensor 120 may have multiple transmitter channels concurrently supplying electromagnetic radiation 130a and 130b to different portions of target area T. These channels may be, for example, associated with each of the sensor 120 subsections 120a-120i. Transmitted signal variance may assess variation of signal magnitude over different transmitter channels. It may be collected over one frame or pass (e.g., the latest). It may be collected and stored over multiple detection frames or passes. Variance may be stored according to mapping data discussed in more detail below. Variance from a current or most recent detection pass may be compared to the previously stored variance.

Received Signal Variance

The raw data may also include the variance in the magnitude of received electromagnetic radiation (hereinafter, "received signal variance") by sensor 120. More specifically, this is the variance in the electromagnetic radiation 130a and 130b received by sensor 120 after reflection from either objects of interest 105a-105c or obstruction 300. This can include mathematical variance (e.g., expectation of the squared deviation of the amplitude from the mean ( $s^2 = \frac{\sum(x_i - \bar{x})}{n-1}$ , where $s^2$ is the variance, $x_i$ is the amplitude, $\bar{x}$ is the mean, and n is the number of data points)) in the electromagnetic radiation 130a and 130b received or detected by sensor 120.

Since, as discussed above, sensor 120 may have multiple receiver channels detecting electromagnetic radiation 130a and 130b from different portions of target area T, the received signal variance may be collected between these different receiver channels (e.g., channels corresponding to sensor portions 120a-120i). The received signal variance may be collected over one frame or pass (e.g., the latest) or it may be collected over multiple frames. Variance may be stored according to mapping data.

Angular and Spatially Resolved Data

A detection in a detection list can include angular or spatially resolved data; for instance, the detection in the detection list can have an SNR value, range, angle, etc. assigned thereto.

Other Data From System 100

As discussed below, data other than detection data and raw signal data can be used to determine blockage state B, a number of detections, or both. This additional data can take many forms and should be understood to encompass any time of data collected by system 100. For example, temperature data collected by device 115 (e.g., temperature data collected via thermometer or thermocouple) may be used to determine the likelihood that any possible obstruction 300 is due to ice or snow. Such temperature data can be used to determine the likelihood of a sensor 120 obstruction 300 under ambient conditions. Other environmental data obtained by device 115 may be used, including barometric data, etc. Stored data relating to weather patterns (e.g., data downloaded from the internet) may also be used.

Analysis

After the sensor 120 acquires raw data from electromagnetic radiation 130a and 130b, application 106 analyzes the data to compute a blockage state B, that describes the degree to which any obstruction 300 has blocked sensor 120 or portion of the sensor 120.

Detection of Objects of Interest 105

Computing system 110 detects objects in a field of view of the radar sensor utilizing any suitable conventional approach; computing system 110 generates a detection list, where the detection list may include a detection that comprises a range value, an angle, and so forth. A detection list can be empty, which may occur when there are no objects in a field of view of the radar sensor or when there is blockage.

Determination of Blockage State B

Application 106 determines a blockage state B. Optionally, the blockage state B includes an estimate of how much and/or which portions of sensor 120 are blocked by obstructions 300. Blockage state B can further optionally indicate a type of material that blocks the portions of sensor 120. Blockage state B is determined from a list that may include the following blockage states.

No Blockage

When B is "no blockage," sensor 120's ability to detect an object of interest 105a-105c or any other object/target/obstacle in the target area T is not impacted by an obstruction 300. In this situation, sensor 120 may be considered to be in "normal" operation mode. In this mode, the number of detections of objects of interest in the detection list equals, or at least provides a good estimate, of the actual number of objects of interest 105a-105c in target area T. Several variables, including the raw data discussed above, may be examined to verify that the sensor 120 is in a state of no blockage.

Blockage

When B is "blockage," sensor 120 has a limited ability to detect an object of interest 105a-105c or other obstacle/target/object in its field. Blockage can denote that sensor 120 is essentially 100% blocked or has essentially no detection capability. Blockage is created by an obstruction, such as obstruction 300. Obstruction 300 can create a state of blockage by covering/blocking the target area T facing surfaces of sensor 120, or other portions of device 100 that house the sensor (e.g., the radome, various windows, or casing).

Partial Blockage

When B is "partial blockage," sensor 120 can still detect objects of interest 105a-105c or any other obstacle/target/object in its field, but its ability to do so is impacted by an obstruction 300. In this case, the obstruction 300 does not prevent detection by way of the sensor 120. Rather, obstruction 300 limits part, but not all, of the field of view of sensor 120 (e.g., only a subset of subdivisions 120a-120i). This configuration is shown in FIG. 3. This partial blockage reduces sensibility of the sensor 120 in a way that could compromise detection quality, particularly if the partial blockage is not detected, analyzed, and accounted for.

Interference

As discussed below, application 106 can distinguish between physical blockage of sensor 120 and other effects. One of these other effects is electromagnetic interference between detected signals, transmitted signals, and other ambient signals. Distinguishing low detection due to interference from low detection due to blockage is important at least because mitigation of interference and blockage problems is completely different.

Determining B Based Upon Raw Data

Blockage state B can be determined based upon values of features of raw data described above and using other data (e.g., environmental data detected by device 115). Determinations can be "baked into" fast-running algorithms such as decision trees, for example. Alternatively, machine learning algorithms can analyze large amounts of detection and signal data *de novo.* It is to be understood that the discussion below applies to using either calculation strategy.

Signal Magnitude Analysis

Blockage state B can be determined in some cases by analyzing the magnitude in a specific range gate (e.g., in the first range gate). This magnitude may be compared to a threshold representing an average or expected magnitude in the range gate. A state B of "Blockage" may be indicated when the magnitude is substantially higher than the threshold.

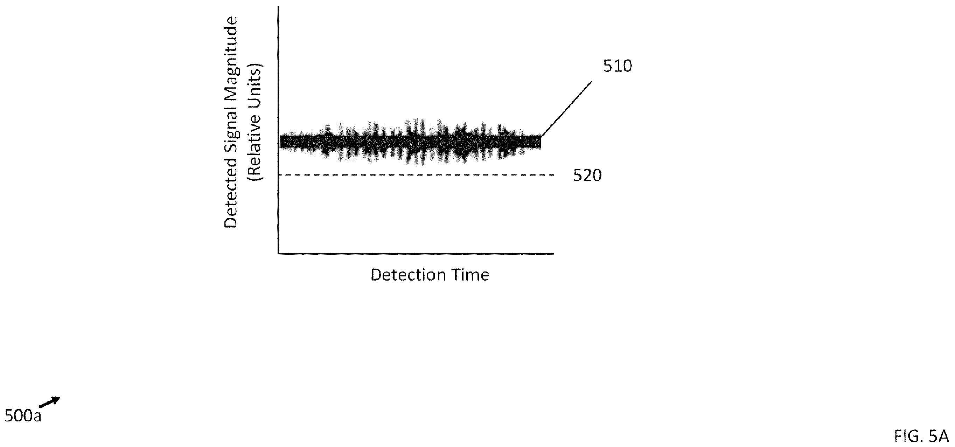

This concept is illustrated schematically in FIG. 5A. Plot 500a represents a magnitude 510 in the first range gate for a frame (e.g., over a detection time). Threshold 520 represents a known magnitude threshold above which the magnitude is indicative of a blocked sensor. For example, threshold 520 may represent a saturation or maximum value in the first range gate. In other cases, threshold 520 may be less than saturation, but still high enough to be known to indicate an obstruction on sensor 300. When the detected magnitude exceeds threshold 520, blockage likely prevents detection data from providing a reasonably accurate indication of objects of interest 105 in target area T.

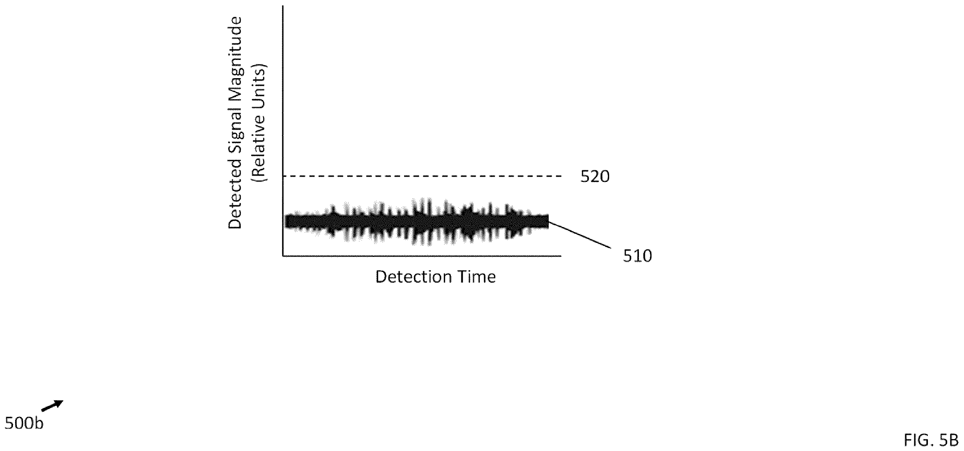

FIG. 5B shows the case in which the magnitude 510 is lower than the threshold 520. This result likely indicates that there is no obstruction 300 of sensor 120.

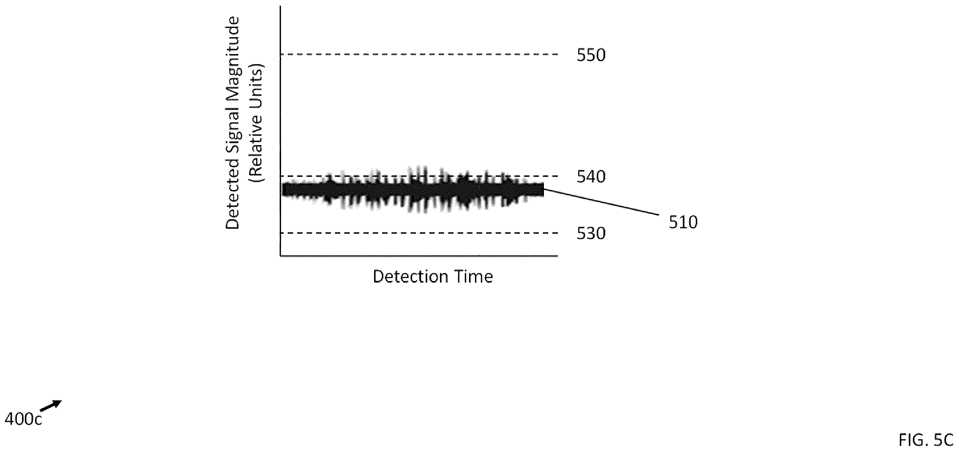

FIG. 5C shows schematically how this technique can be used to determine a type of obstructing material 300. Reflection from ice and mud obstructions 300 likely results in magnitudes being different in the first range gate. Different magnitude thresholds associated with different materials can be measured using system 100 or estimated by some other means (e.g., from measurements on other systems or via mathematical or numerical simulation). These thresholds can be stored in data store 108 prior to detection. Once detected, the detected signal magnitude can be compared against the stored threshold.

FIG. 5C schematically represents three different thresholds 530, 540, and 550. These thresholds have previously been measured to be associated with a different type of material (materials A, B, and C, respectively). The detected magnitude 510 is measured as being close to the threshold 540 for material B. Therefore, this result may indicate the presence at sensor 120 of an obstruction made of material B (e.g., mud) rather than an obstruction made of ice (material C, threshold 550). Similar determinations could be made using measured thresholds for obstructions 300 caused by snow, dirt, leaves, other debris, etc. Metal debris, for example, would be even more reflective than other materials. For this reason, signal 120 blockage due to metal debris would likely exhibit a very high signal threshold.

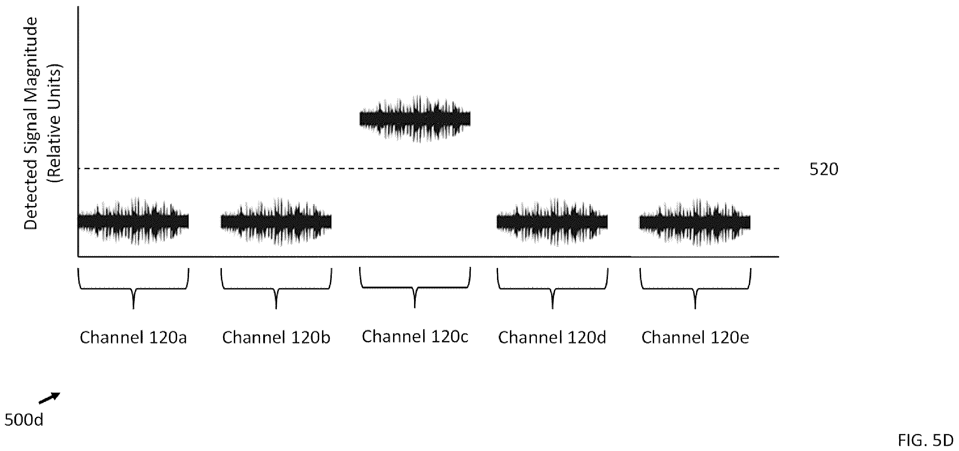

FIG. 5D shows schematically how this blockage detection method may be used to determine which subsections (e.g., antennas), if any, are blocked. In this technique, detected magnitudes from first range gates in range-Doppler maps of different channels may be compared in a single frame or across frames. Channels exhibiting high detected magnitude with respect to the blockage threshold 520 may indicate blockage by an obstruction 300 for the same reasons discussed above.

In FIG. 5D, channel 120c exhibits a detected magnitude above blockage threshold 520, while the detected magnitudes for channels 120a, 120b, 120d, and 120e are below the threshold 520. In this way, channel 120c can be identified as blocked, or having a blockage condition B of "blocked," while channels 120a, 120b, 120d, and 120e have "no blockage." In that sense, the blockage can be spatially located based on the location of the channel(s) identified as blocked. Locating and identifying blocked channels can be useful in determining mitigation steps. Moreover, examining detected magnitude for blocked channels over several frames may provide an indication of when the blockage occurred. The frame during which detected magnitude exceeds threshold 520 is likely the frame when blockage occurred.

Information from analyzing blockage via different thresholding techniques (e.g., shown in FIGs. 5A-5D) can be combined to provide more information. For example, different materials thresholds (e.g., thresholds 530, 540, and 550 in FIG. 5C) can be used in conjunction with a channel blockage analysis (FIG. 5D). Doing so may provide the spatial location of the blockage as well as the blockage material type.

Noise Level Analysis

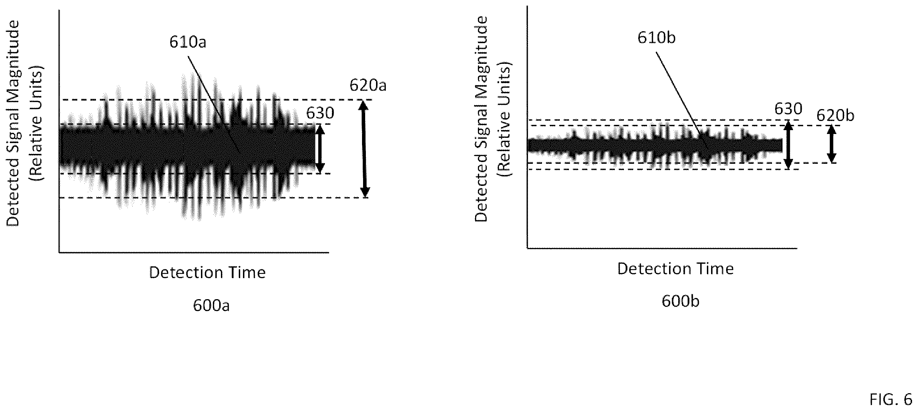

FIG. 6 is a schematic showing another way to determine blockage state B by analyzing noise level. Generally speaking, when electromagnetic radiation 130a and 130b is reflected from objects of interest 105 after traversing target area T, substantial noise can accumulate in the signal. This noise will be detected by sensor 120. This is shown schematically in plot 600a of FIG. 6, which represents a detected signal 610a after such a reflection. The detected signal 610a has a noise level 620a (e.g., an RMS noise level) that is greater than a threshold noise level 630. The threshold noise level 630 can be chosen to reflect relatively low signal noise, such as results from electromagnetic radiation 130a and 130b being reflected from obstruction 300 without traversing target area T.

In contrast to the unobstructed detected signal 610a in plot 600a, detected signal 610b in plot 600b is from reflection from obstruction 300. The resulting noise level 620b is substantially lower than 620a, and similar to the noise threshold 630. In this way, noise level alone can indicate the presence of an obstruction. Therefore, these two noise measurements can help distinguish the case between an obstructed sensor (plot 600b) and an unobstructed sensor (600a).

The threshold noise level 630 may be determined empirically testing the system 100 itself. For example, system 100 can be tested to ascertain noise when there is an obstruction 300. This threshold can be used as noise threshold 630. Threshold 630 may also be estimated based on similar experiments performed on other systems or, alternatively, estimated mathematically. In the latter case, noise threshold 630 can be assigned based on known quantities, such as the inherent detection limitations of the system 100, known conditions in the target area T that may affect noise level (e.g., weather, interference from other electromagnetic sources, etc.), or previous measurements. Threshold 630 may be determined by one or more of the machine learning algorithms mentioned herein, e.g., by letting the algorithm determine the threshold from a training set.

Noise level can also be used to distinguish between blockage by an obstruction 300 and electromagnetic interference between signals from detector portions 120a-120i (and associated channels). Because a signal subject to interference and one subject to blocking both tend to have high magnitude, it can be difficult to distinguish them by magnitude alone.

Signals transmitted or received by sensor 120 and/or transmitter 112 can interfere with one another. Signals detected by sensor 120 can also interfere with other ambient signals. Examples of the latter include cellular signals, signals from wi-fi, etc. In either case, interference in a signal detected by sensor 120 can lead to increased noise and diminished accuracy, particularly in detection data. At the same time, substantial interference in a detected signal may still leave that signal with a relatively high signal magnitude.

Noise analysis provides a useful means of distinguishing between a case of signal interference and signal blocking by obstruction 300. Interference will increase noise levels, sometimes even beyond those that accrue from traversing target area T. Noise due to interference, then, can be even greater than noise 620a shown in FIG. 6. Therefore, a signal with noise due to interference should be distinguishable from blocked signal 620b for similar reasons that noise 620a is distinguishable. The noise level observed in detection of a signal that can potentially be subject to interference can be compared to, for example, an average level of noise for detector 120 to make this determination.

Signal Variance

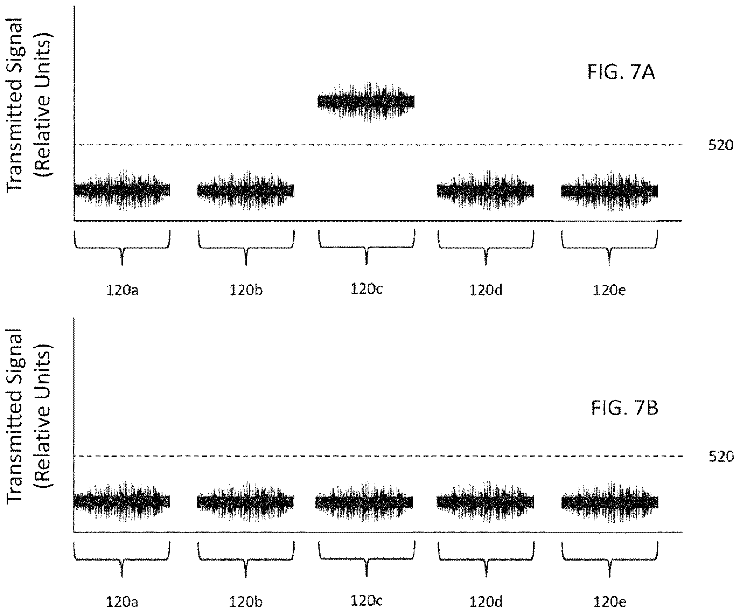

Other examples of quantities from the raw data useful in blockage state B characterization include the signal variance, e.g., the transmitted signal variance. If the transmitted signal variance between transmitter channels in one frame is large, this indicates that the transmitter magnitude for particular channels is much higher than others. This is shown schematically in the comparison of FIGs. 7A and 7B, each showing a series of magnitudes for different channels 120a-120e. In the case of FIG. 7B, signal magnitudes for each channel 120a-120e are approximately equal, yielding a very low mathematical variance between them. In contrast, FIG. 7A shows a situation in which the transmitted signal for channel 120c is much higher than for channels 120a, 120b, 120d, and 120e. In this case, channel 120c requires different magnitude to get return signal. One possible reason for this variance is blockage 300. In this case, B is likely equal to "partial blockage," specifically blockage at channel 120c.

On the other hand, if the transmitted signal variance is similar across all channels (e.g., channels corresponding to portions of detector 120a-120i), like in FIG. 7B, this can indicate that each of the channels is actually measuring signals from a reflected object of interest rather than a blockage 300. Complete blockage of sensor 120 might also yield a low transmitted signal variance because each channel and/or associated detector portion 120a-120i is essentially transmitting and receiving the same signal at the same distance (e.g., the distance of obstruction 300). Therefore, in the case where the transmitted signal variance is relatively low, the magnitude of the received signal across channels may need to be compared with a threshold. If the magnitude of the received signal is high, this may indicate blockage for the reasons discussed above.

Transmitted signal variance could be measured across one detection frame. Alternatively, the transmitted signal variance can be measured across multiple detection frames. Changes in transmitted signal variance from frame to frame may indicate a change in the blockage condition B. For example, if transmitted signal variance suddenly increases and remains high, this may indicate that a blockage event has occurred to cause the increase in transmitted signal variance. On the other hand, if the transmitted signal variance remains stable but the number of detections decreases, this may not be due to blockage.

Similar to the transmitted signal variance, variance in the received or detected signal can also be used to detect blockage or absence of blockage. If the variance in detected signal between receiver channels in one frame is large, this indicates that detected signal for particular channels is higher. In that case, the channels, which correspond in principle to portions of detector 120a-120i, are receiving differing magnitude of reflected signal. One possible reason is that they are detecting an obstruction 300 rather than objects of interest. As discussed above, this is because signal detected from a sensor 120 obstruction 300 is not subject to signal attention from various sources in target area T and, therefore, may be higher than signal reflected from objects of interest 105. Similar to variance in transmitted signals, variance in detected signals can be measured across multiple frames to ascertain whether a blockage event has occurred. More specifically, a sudden increase in received signal variance in one frame may indicate a blockage event.

Environmental Variables

Environmental variables, e.g., those measured by device 115, can also be used to determine the likelihood of blockage. Such environmental variables include, for example, measures of temperature or barometric pressure. For example, if the temperature is below freezing, this increases the likelihood of an obstruction 300 due to snow and ice. If the humidity is above a certain threshold, this increases the likelihood that an obstruction 300 due to precipitation, moisture, or fog. Barometric pressure can be used to determine the likelihood of precipitation, for example. In addition, actual weather data (either forecasted or recorded) may be used. Weather data may be ascertained locally, may be input locally, and/or may be obtained from another source. For example, system 100 may download weather information from a remote source, such as a data channel available through the world wide web.

Although the raw data variables including noise level, magnitude level, magnitude of transmitted signal variance, magnitude of received signal variance, temperature and other climate variables are discussed independently above, it is to be understood that each of these variables can be used together to determine blockage state B. In many cases, it is advantageous for application 106 to combine each of these variables in its analysis. In certain applications, it may be advantageous to allow application 106 to determine or select which variables are important and weight their importance. This can be performed by according to any of the known algorithms described herein (e.g., by any of the ANNs mentioned herein).

Implementing Aspects of the Present Disclosure

Method of Implementation 800

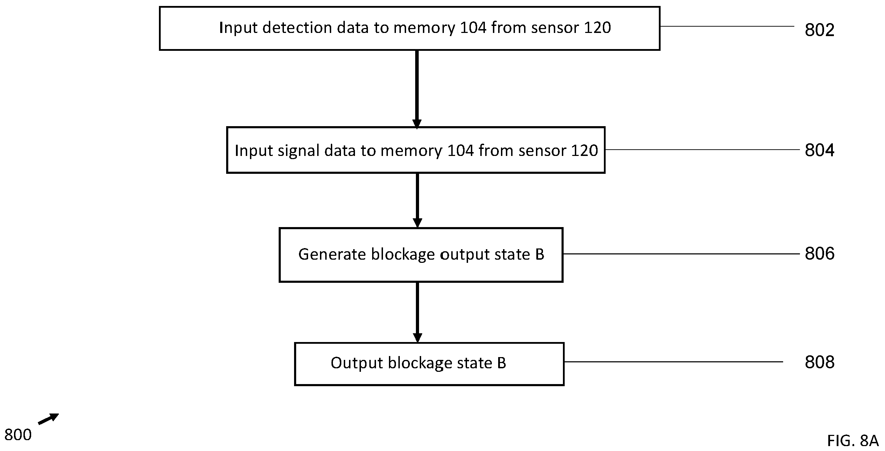

FIG. 8A is a flowchart 800 that shows implementing aspects of the present disclosure. Although FIG. 8A shows a sequence of steps, it is to be understood that this presentation is not limiting. When appropriate, steps shown in flowchart 800 may be taken in a different order in accordance with this disclosure.

As shown in FIG. 8A, in step 802, detection data is input to memory 104 of computing device 110 from sensor 120. Prior to this step, sensor 120 has acquired at least one frame of sensor data 111 from the target area T. The acquired frame of sensor data 111 includes at least sufficient data to generate detection data, specifically data that indicates at least how many objects of interest 105 can be detected from the frame. The detection data may be pre-processed to determine the individual detections using any of the methods and algorithms described herein. Alternatively, it may be saved to memory 104 as raw detection data. In the latter case, the computing device 110 processes the detection data to determine the individual detections, then save at least the number of detections to memory 104. Also saved at this step may be other quantities associated with the detection data. For example, identities or types of the objects of interest 105 can be saved to memory. Detection data from earlier frames may also be saved to memory 104 at this step.

In step 804, signal data is input to memory 104 of computing device 110 from sensor 120. Prior to this step, sensor 120 has acquired at least one frame of signal data from the target area T. The acquired frame of data includes raw signal/sensor data, including at least one of SNR, range, angle, signal magnitude, transmitted signal variance, received signal variance data. The signal data may be pre-processed (e.g., truncated, averaged, filtered, Fourier transformed, subject to other mathematical transformation, etc.) prior to this step. It may also be processed during this step. If the transmitted signal variance or received signal variance has not been determined, it may be determined from the signal data at this step. Signal data from earlier frames may also be saved to memory 104 in this step.

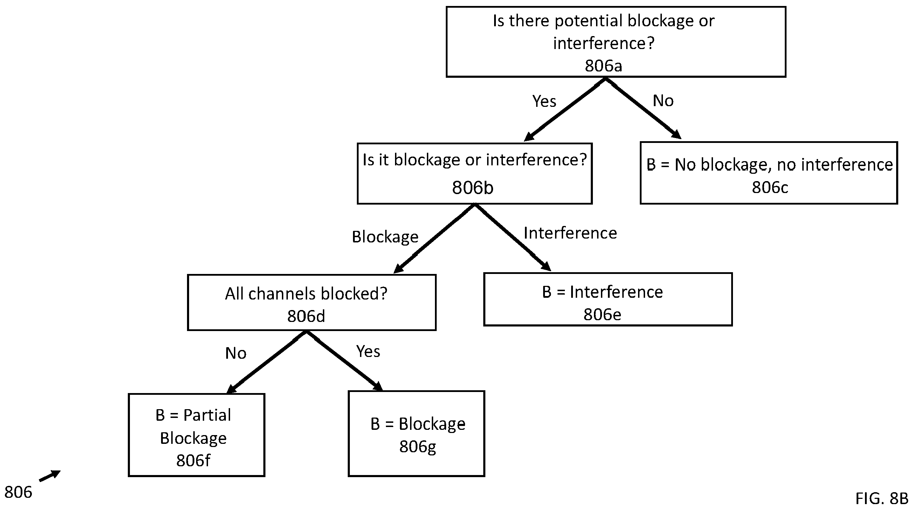

In step 806, the application 106 generates blockage output state B based on the data input in steps 802 and 804. Any suitable algorithm 806 may be used to perform this step. On effective algorithm 806 is a decision tree. Decision trees can be pre-loaded with information to make quick comparisons to determine a solution/outcome. Decision trees can be faster in implementation than ANNs or other more sophisticated machine learning programs. An exemplary decision tree for implementing step 806 appears in FIG. 8B. However, it is to be understood that step 806 need not be implemented entirely, or even partially, with a decision tree. Any suitable machine learning algorithm described herein may be used to perform this step.

Determining blockage state B in this step may proceed using any of the techniques and methods described herein. For example, this step may include comparing a signal magnitude to a threshold to determine whether or not there is blockage. Mathematical variance in signal magnitude over either the transmitter or detector channels (e.g., channels 120a-120i) may be ascertained. Either variance may be compared against a threshold variance to determine whether or not a blockage has occurred.

In the case a blockage is detected, step 806 may further include comparing the signal magnitude to thresholds associated with specific types of blockage (ice, mud, dirt, dust, snow, rain, fog, etc.) to determine the type of blockage. Data from other sources (e.g., device 115) may also be used to determine the environmental conditions (e.g., temperature) of the blockage. This may assist in determining the specific type of blockage. The detected signal magnitude may be compared for different channels (e.g., channels 120a-120e) to determine if any individual channels are blocked. This determination can be made with any of the thresholds described above.

In step 806, noise in the signal data may be assessed. Comparison of the assessed signal noise with prior or expected noise may determine whether there is a blockage. Comparison of the signal noise with a measured or calculated threshold noise may determine whether or not any deficiency in detection is due to blockage or interference.

Any of the determinations above may be combined to determine the blockage state B for the current pass. Depending on need, blockage state B may include an indication of whether the sensor 120 is blocked, unblocked, and partially blocked. Blockage state B may further include the cause of blockage (e.g., by ice, water, mud, dirt). Blockage state B may include the identity of one or more blocked data channels or sensor portion 210a-210i. Blockage state B may indicate whether any portion of the sensor 120 is subject to interference.

In step 808, the blockage state B determined in step 806 is output to system 100. Output may include providing the blockage state B to a navigation system for an autonomous vehicle, for example. The navigation system may then use the blockage state B and the detection data to determine mitigation steps for any detected blockages. Mitigation steps may include use of wipers or other mechanical/fluid cleaners to remove the obstruction 300. They may further include, in the case of interference, providing a warning that interference is causing inaccurate detection.

Exemplary Decision Tree for Implementing Step 806

FIG. 8B shows an exemplary decision tree for implementing step 806. It is to be understood that the decision tree in FIG. 8B is merely exemplary and is somewhat simplified for illustrative purposes only.

At step 806a, the tree decides whether the detected signal data includes evidence of some kind of issue, e.g., a sensor 120 blockage or electromagnetic interference. As discussed above, this can be determined, for example, by comparing the detected signal magnitude with a threshold 520 indicative of blockage or interference (see discussion of FIG. 5A above). If the received signal magnitude is lower than threshold 520, this may be taken as an indication that there is no blockage or interference (i.e., sensor 120 is functioning normally). In that case, the tree terminates at step 806c and outputs the blockage state B = "No blockage, no interference." On the other hand, if the received signal magnitude is above the threshold 520, the tree proceeds to step 806b since a detection issue (e.g., either interference or blockage) has been identified.

At step 806b, the tree determines whether the issue is blockage or interference. As discussed above, this can be accomplished by, for example, comparing the noise level in the received signal against a noise threshold 630 indicative of interference (see discussion of FIG. 6 above). If the noise is greater or equal to the noise threshold 630, the issue is interference. The decision tree proceeds to step 806e and outputs B = "Interference." If the noise is less than the noise threshold 630, the decision tree proceeds to step 806d to try to determine the channel(s) that are blocked.

At step 806d, the tree can determine one or more blocked channels, e.g., by comparing the magnitude of the detected signal magnitude across channels. If no channel 120a-120i exhibits a detected signal magnitude less than threshold 520, the tree determines that B = "Blockage," indicating all channels 210a-210i are blocked. The tree outputs this blockage state at step 806g. If one or more channels exhibits a signal magnitude less than threshold 520, the sensor 120 is only partially blocked. The tree then outputs B = "Partial Blockage" at step 806f.

Steps 806f and 806g may include additional steps to characterize the blockage. For example, both steps 806f and 806g may compare the received signal magnitude with a number of thresholds to determine the cause of the blockage (e.g., ice, dirt, or snow; see discussion of FIG. 5C). Step 806f may include determining which channels are blocked by comparing their detected signal magnitudes with threshold 520 (see discussion of FIG. 5D above).

Application Training Method 820

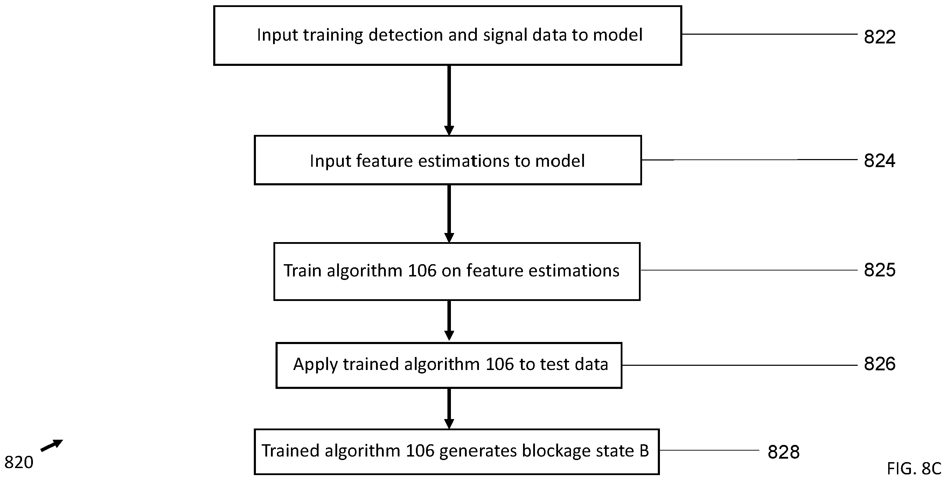

FIG. 8C is a flowchart 820 that shows training a machine learning algorithm to implement aspects of the present disclosure. In particular, flowchart 820 shows training that may be implemented on application 106 to implement method 800. Although FIG. 8C shows a sequence of steps, it is to be understood that this presentation is not limiting. When appropriate, steps shown in flowchart 820 may be taken in a different order in accordance with this disclosure.

In step 822, training data is input to model (e.g., application 106, e.g., decision tree 806 shown in FIG. 8B). The training data is typically tagged or classified to correlate the inputted data the known, correct feature estimations. The feature estimations themselves are then added to the model in step 824.

In step 825, application 106 is trained. In training, the model parameters are adjusted so that it produces correct feature estimations based in inputted data in step 822.

In step 826, test data is input to trained application 106. In step 828, trained application 106 generates blockage state B based on test data input in step 826.

Exemplary Computing Device 900

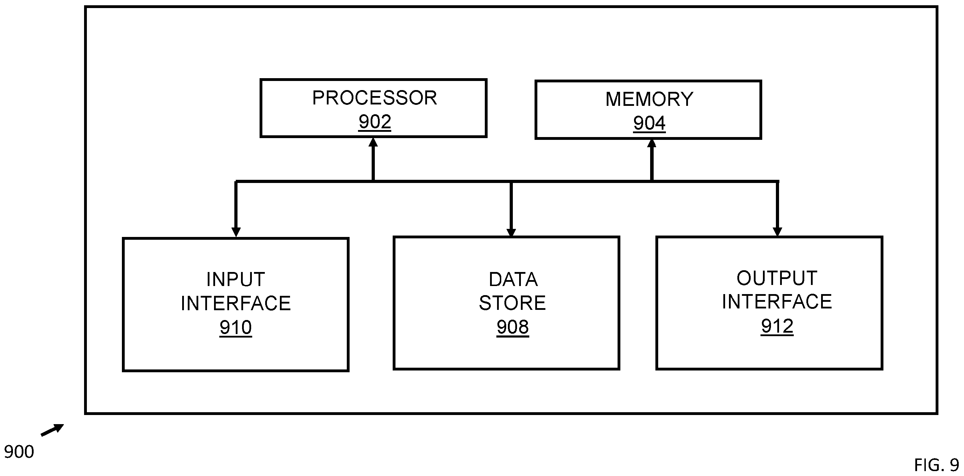

FIG. 9 presents a high-level illustration of an exemplary computing device 900 that can be used in accordance with the systems and methodologies disclosed herein. Computing device 900 may include the computing device 110 (FIGs. 1 and 4).

Computing device 900 includes at least one processor 902 that executes instructions that are stored in a memory 904. The instructions may be, for instance, instructions for implementing functionality described as being carried out by one or more systems discussed above or instructions for implementing one or more of the methods described above. The processor 902 may be a graphics processing unit (GPU), a plurality of GPUs, a central processing unit (CPU), a plurality of CPUs, a multi-core processor, etc. The processor 902 may access the memory 904 by way of a system bus 906. In addition to storing executable instructions, the memory 904 may also store computer-implemented machine learning models, sensor data, labeled sensor data, mapping data, weighted directed graphs, etc.

The computing device 900 additionally includes a data store 908 that is accessible by the processor 902 by way of the system bus 906. The data store 908 may include executable instructions, computer-implemented machine learning applications, sensor data, labeled sensor data, mapping data, weighted directed graphs, etc. The computing device 900 also includes an input interface 910 that allows external devices to communicate with the computing device 900. For instance, the input interface 910 may be used to receive instructions from an external computer device, etc. The computing device 900 also includes an output interface 912 that interfaces the computing device 900 with one or more external devices. For example, the computing device 900 may transmit control signals to the vehicle propulsion system 406, the braking system 408, and/or the steering system 410 by way of the output interface 912.

Additionally, while illustrated as a single system, it is to be understood that the computing device 900 may be a distributed system. Thus, for instance, several devices may be in communication by way of a network connection and may collectively perform tasks described as being performed by the computing device 900.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

Various features pertaining to identifying a blockage state of a radar system are described herein in accordance with the following examples.

(A1) In an aspect, a method is disclosed herein, where the method includes generating a detection based upon output of a receiver antenna, the detection representing an object in a field of view of a radar sensor that has been detected by the radar sensor. The method also includes generating raw sensor data based upon the output of the receiver antenna. The method further includes computing a blockage state for the radar sensor based upon the detection and the raw sensor data. The method additionally includes outputting the blockage state to a computing system that is coupled to the radar sensor.

(A2) In some embodiments of the method of (A1), the blockage state is one of a predefined number of blockage states that includes blocked, unblocked, and partially blocked.

(A3) In some embodiments of the method of at least one of (A1)-(A2), the raw sensor data includes a range-Doppler map that comprises a cell having a value, and further wherein the blockage state is computed based upon the value of the cell.

(A4) In some embodiments of the method of at least one of (A1)-(A3), the raw sensor data comprises data output by an ADC of the radar sensor.

(A5) In some embodiments of the method of at least one of (A1)-(A4), the detection comprises a SNR value for the detection, and further wherein the blockage state is computed based upon the SNR value.

(A6) In some embodiments of the method of at least one of (A1)-(A5), the detection comprises a range value that is indicative of a distance between the radar sensor and the object, and further wherein the blockage state is computed based upon the range value.

(A7) In some embodiments of the method of at least one of (A1)-(A6), the detection comprises a value that is indicative of a direction between the radar sensor and the object, and further wherein the blockage state is computed based upon the value.

(A8) In some embodiments of the method of at least one of (A1)-(A7), the raw sensor data comprises a magnitude value, and further wherein the blockage state is computed based upon the magnitude value.

(A9) In some embodiments of the method of at least one of (A1)-(A8), computing the blockage state for the radar sensor based upon the detection and the raw sensor data comprises providing the radar sensor data and the raw sensor data as input to a computer-implemented decision tree, and further wherein the computer-implemented decision tree outputs the blockage state.

(A10) In some embodiments of the method of at least one of (A1)-(A9), computing the blockage state comprises identifying that the antenna of the radar sensor is blocked from amongst several antennas of the radar sensor.

(A11) In some embodiments of the method of at least one of (A1)-(A10), computing the blockage state comprises identifying a type of material that is blocking at least a portion of the radar sensor from amongst several predefined materials.

(B1) In another aspect, a method includes performing a scan over a field of view of a radar sensor, where performing the scan includes: a) generating, for a window of time, raw sensor data based upon an electrical signal output by an antenna of the radar sensor; and b) outputting a detection list based upon the raw sensor data. The method also includes computing a blockage state of the radar sensor based upon the raw sensor data and the detection list, wherein the blockage state indicates whether or not a portion of the radar sensor is subject to blockage. The method additionally includes outputting the blockage state to a computing system that is in communication with the radar sensor.

(B2) In some embodiments of the method of (B1), computing the blockage state includes: 1) identifying a first feature value corresponding to the detection list; and 2) identifying a second feature value corresponding to the raw sensor data, wherein the block state is computed based upon the first feature value and the second feature value.

(B3) In some embodiments of the method of (B2), computing the blockage state additionally incudes providing the first feature value and the second feature value as input to a computer-implemented decision tree, where the computer-implemented decision tree outputs the blockage state based upon the first feature value and the second feature value.

(B4) In some embodiments of the method of (B3), the first feature value is a number of detections in the detection list.

(C1) In another aspect, a radar sensor is described herein, where the radar sensor includes a receiver antenna and processing circuitry that is operably coupled to the receiver antenna. The processing circuitry is configured to perform at least one of the methods disclosed herein (e.g., any of the methods of (A1)-(A11) or (B1)-(B3).

(D1) In another aspect, a radar sensor is configured to perform at least one of the methods described herein (.g., any of the methods of (A1)-(A11) or (B1)-(B3).

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A radar sensor comprising:

   a receiver antenna; and
   processing circuitry that is operably coupled to the receiver antenna, the processing circuitry configured to perform acts comprising:

   generating a detection based upon output of the receiver antenna, the detection representing an object in a field of view of the radar sensor that has been detected by the radar sensor;
   generating raw sensor data based upon the output of the receiver antenna;
   computing a blockage state for the radar sensor based upon the detection and the raw sensor data; and
   outputting the blockage state to a computing system that is coupled to the radar sensor.

2. The radar sensor of claim 1, wherein the blockage state is one of a predefined number of blockage states that includes blocked, unblocked, and partially blocked.

3. The radar sensor of at least one of claims 1-2, wherein the raw sensor data includes a range-Doppler map that comprises a cell having a value, and further wherein the blockage state is computed based upon the value of the cell.

4. The radar sensor of at least one of claims 1-3, further comprising an analog-to-digital converter (ADC) that is operably coupled to the receiver antenna, and further wherein the raw sensor data comprises data output by the ADC.

5. The radar sensor of at least one of claims 1-4, wherein the detection comprises a signal to noise (SNR) value for the detection, and further wherein the blockage state is computed based upon the SNR value.

6. The radar sensor of at least one of claims 1-5, wherein the detection comprises a range value that is indicative of a distance between the radar sensor and the object, and further wherein the blockage state is computed based upon the range value.

7. The radar sensor of at least one of claims 1-6, wherein the detection comprises a value that is indicative of a direction between the radar sensor and the object, and further wherein the blockage state is computed based upon the value.

8. The radar sensor of at least one of claims 1-7, wherein the raw sensor data comprises a magnitude value, and further wherein the blockage state is computed based upon the magnitude value.

9. The radar sensor of at least one of claims 1-8, wherein computing the blockage state for the radar sensor based upon the detection and the raw sensor data comprises providing the radar sensor data and the raw sensor data as input to a computer-implemented decision tree, and further wherein the computer-implemented decision tree outputs the blockage state.

10. The radar sensor of at least one of claims 1-9, wherein computing the blockage state comprises identifying that the antenna of the radar sensor is blocked from amongst several antennas of the radar sensor.

11. The radar sensor of at least one of claims 1-10, wherein computing the blockage state comprises identifying a type of material that is blocking at least a portion of the radar sensor from amongst several predefined materials.

12. A method performed by a radar sensor, the method comprising:

    performing a scan over a field of view of the radar sensor, where performing the scan comprises:

    generating, for a window of time, raw sensor data based upon an electrical signal output by an antenna of the radar sensor; and outputting a detection list based upon the raw sensor data;

    computing a blockage state of the radar sensor based upon the raw sensor data and the detection list, wherein the blockage state indicates whether or not a portion of the radar sensor is subject to blockage; and

    outputting the blockage state to a computing system that is in communication with the radar sensor.

13. The method of claim 12, wherein computing the blockage state comprises:

    identifying a first feature value corresponding to the detection list; and identifying a second feature value corresponding to the raw sensor data,

    wherein the block state is computed based upon the first feature value and the second feature value.

14. The method of claim 13, wherein computing the blockage state further comprises providing the first feature value and the second feature value as input to a computer-implemented decision tree, wherein the computer-implemented decision tree outputs the blockage state based upon the first feature value and the second feature value.

15. The method of claim 14, wherein the first feature value is a number of detections in the detection list.

EP 4 407 339 A1

FIG. 1

EP 4 407 339 A1

FIG. 2

FIG. 3

EP 4 407 339 A1

110

COMPUTING SYSTEM

PROCESSOR
102

MEMORY 104

ANALYTICAL
APPLICATON
106

DATA STORE 108

SENSOR DATA
111

FIG. 4

FIG. 5A

500a

FIG. 5B

FIG. 5C

FIG. 5D

FIG. 6

FIG. 7A

FIG. 7B

520

520

120a 120b 120c 120d 120e

120a 120b 120c 120d 120e

Transmitted Signal (Relative Units)

Transmitted Signal (Relative Units)

EP 4 407 339 A1

EP 4 407 339 A1

```
┌─────────────────────────────────────────────────────┐
│  Input detection data to memory 104 from sensor 120  │────── 802
└─────────────────────────────────────────────────────┘
                           │
                           ▼
┌─────────────────────────────────────────────────────┐
│   Input signal data to memory 104 from sensor 120    │────── 804
└─────────────────────────────────────────────────────┘
                           │
                           ▼
        ┌───────────────────────────────────┐
        │    Generate blockage output state B │────── 806
        └───────────────────────────────────┘
                           │
                           ▼
        ┌───────────────────────────────────┐
        │        Output blockage state B      │────── 808
        └───────────────────────────────────┘
```

800

FIG. 8A

Is there potential blockage or interference?
806a

No

B = No blockage, no interference
806c

Yes

Is it blockage or interference?
806b

Interference

B = Interference
806e

Blockage

All channels blocked?
806d

Yes

B = Blockage
806g

No

B = Partial Blockage
806f

806

FIG. 8B

EP 4 407 339 A1

```
┌────────────────────────────────────────────────┐
│  Input training detection and signal data to model │——— 822
└────────────────────────────────────────────────┘
                        │
                        ▼
        ┌──────────────────────────────────┐
        │   Input feature estimations to model   │——— 824
        └──────────────────────────────────┘
                        │
                        ▼
        ┌──────────────────────────────────┐
        │  Train algorithm 106 on feature estimations │——— 825
        └──────────────────────────────────┘
                        │
                        ▼
        ┌──────────────────────────────────┐
        │   Apply trained algorithm 106 to test data  │——— 826
        └──────────────────────────────────┘
                        │
                        ▼
        ┌──────────────────────────────────┐
        │ Trained algorithm 106 generates blockage state B │——— 828
        └──────────────────────────────────┘
```

820

FIG. 8C

FIG. 9

Europäisches
Patentamt

European
Patent Office

Office européen
des brevets

# EUROPEAN SEARCH REPORT

**Application Number**

EP 23 15 3640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/241111 A1 (FETTERMAN MATTHEW [US] ET AL) 30 July 2020 (2020-07-30) * paragraphs [0001], [0026], [0031], [0038], [0051]; figures 1A, 5C, 6, 7A * | 1-15 | INV. G01S7/40 G01S13/931 G01S7/02 |
| X | US 2022/349994 A1 (MARSCH SEBASTIAN [DE]) 3 November 2022 (2022-11-03) * paragraph [0008]; figures 3, 6 * | 1,12 | |
| X | US 2017/269196 A1 (MILLAR JEFFREY [US] ET AL) 21 September 2017 (2017-09-21) * paragraph [0007]; figure 4A * | 1,12 | |
| A | WO 2004/015446 A1 (RAYTHEON CO [US]) 19 February 2004 (2004-02-19) * page 2, line 10 - line 15; figures 3, 5, 7, 9 * | 1,10,12 | |

TECHNICAL FIELDS
SEARCHED       (IPC)

G01S

The present search report has been drawn up for all claims

| Place of search | Date of completion of the search | Examiner |
|---|---|---|
| Munich | 4 July 2023 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 3640

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2023

| Patent document cited in search report | | Publication date | Patent family member(s) | | Publication date |
|---|---|---|---|---|---|
| US 2020241111 | A1 | 30-07-2020 | CN 113302510 | A | 24-08-2021 |
| | | | EP 3914924 | A1 | 01-12-2021 |
| | | | US 2020241111 | A1 | 30-07-2020 |
| | | | US 2022163631 | A1 | 26-05-2022 |
| | | | WO 2020154046 | A1 | 30-07-2020 |
| US 2022349994 | A1 | 03-11-2022 | CN 114207468 | A | 18-03-2022 |
| | | | EP 3779505 | A1 | 17-02-2021 |
| | | | US 2022349994 | A1 | 03-11-2022 |
| | | | WO 2021028483 | A1 | 18-02-2021 |
| US 2017269196 | A1 | 21-09-2017 | EP 3430422 | A1 | 23-01-2019 |
| | | | US 2017269196 | A1 | 21-09-2017 |
| | | | WO 2017160554 | A1 | 21-09-2017 |
| WO 2004015446 | A1 | 19-02-2004 | AU 2003231167 | A1 | 25-02-2004 |
| | | | DE 60315162 | T2 | 17-04-2008 |
| | | | EP 1529225 | A1 | 11-05-2005 |
| | | | JP 4447455 | B2 | 07-04-2010 |
| | | | JP 2005535876 | A | 24-11-2005 |
| | | | KR 20050032583 | A | 07-04-2005 |
| | | | US 6611227 | B1 | 26-08-2003 |
| | | | WO 2004015446 | A1 | 19-02-2004 |

EPO FORM P0459

For more details about this annex : see Official Journal of the European Patent Office, No. 12/82